Europäisches Patentamt

European Patent Office

Office européen des brevets

(11) Publication number: **0 239 781**

**A1**

(12) **EUROPEAN PATENT APPLICATION**

(21) Application number: **87102528.4**

(51) Int. Cl.⁴: **F16B 7/04**

(22) Date of filing: **23.02.87**

(30) Priority: **05.03.86 IT 2113886 U**

(43) Date of publication of application:
**07.10.87 Bulletin 87/41**

(84) Designated Contracting States:
**AT BE CH DE ES FR GB GR LI LU NL SE**

(71) Applicant: **Castiglioni, Achille**
**Piazza Castello, 27**
**I-20121 Milano(IT)**
Applicant: **Pozzi, Giancarlo**
**Via Monte Cervino, 7**
**I-20149 Milano(IT)**

(72) Inventor: **Castiglioni, Achille**
**Piazza Castello, 27**
**I-20121 Milano(IT)**
Inventor: **Pozzi, Giancarlo**
**Via Monte Cervino, 7**
**I-20149 Milano(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) **A campling coupling for connecting intersecting rod-shaped bodies together.**

(57) A coupling for connecting together intersecting rod-shaped bodies of which at least one is hollow comprises, for insertion into the hollow rod-shaped body (1), two members (4, 13), one inside the other, provided with inclined cooperating surfaces (5, 18). The inner (4) of said members is arranged to embrace the other rod-shaped body (2). A screw means(10) joins said members (4, 13) together in such a manner as to produce, when in use, a relative movement between them which, by virtue of the cooperation between said surfaces, results in the connection together of said rod-shaped bodies (1, 2) by means of the coupling.

Fig. 2

## A CLAMPING COUPLING FOR CONNECTING INTERSECTING ROD-SHAPED BODIES TOGETHER

This invention relates to a coupling for connecting together intersecting rod-shaped bodies (of which at least one is hollow), which possesses particularly useful characteristics by virtue of the combination and shape of its parts.

Couplings of the most varied constructional configurations are currently used for connecting two rod-shaped bodies together. These known couplings lie external to the bodies to be connected together, and can therefore not be used where the outline of the structure formed by combining the various rod-shaped bodies must not be disfigured, such as in the case of an article of furniture or a display structure. Moreover, these known couplings do not allow two intersecting rod-shaped bodies, ie of which one traverses the other, to be connected together.

The object of the invention is to provide a coupling for removably connecting two intersecting rod-shaped bodies together, which is concealed within that of said bodies which is hollow, does not require main load-bearing parts of the structure to be weakened, and does not require the connection points to be unalterably predetermined.

This and further objects which will be more apparent from the detailed description given hereinafter are attained by a coupling, characterised essentially by comprising, for insertion into the hollow rod-shaped body, two members, one inside the other, provided with inclined-plane cooperating surfaces, the inner of said members being arranged to embrace the other rod-shaped body, a screw means joining said members together in such a manner as to produce, when in use, a relative movement between them which, by virtue of the cooperation between said surfaces, results in the connection together of said rod-shaped bodies by means of the coupling.

The invention will be more apparent from the detailed description given hereinafter by way of example with reference to the accompanying drawing, in which:

Figure 1 is a perspective view of two intersecting rod-shaped bodies to be connected together by the coupling of the invention;

Figure 2 is a section on the line II-II of Figure 1; and

Figure 3 is an end view of the inner member of the coupling.

In the figures, the reference numeral 1 indicates a hollow rod-shaped body which can have any cross-section besides the rectangular cross-section shown, and 2 indicates a rod-shaped body which can be hollow or solid, and can also have any cross-section besides the square cross-section shown on the drawing.

The rod-shaped body 2 traverses the hollow body 1 by passing through aligned apertures 3 of practically corresponding shape provided in this latter.

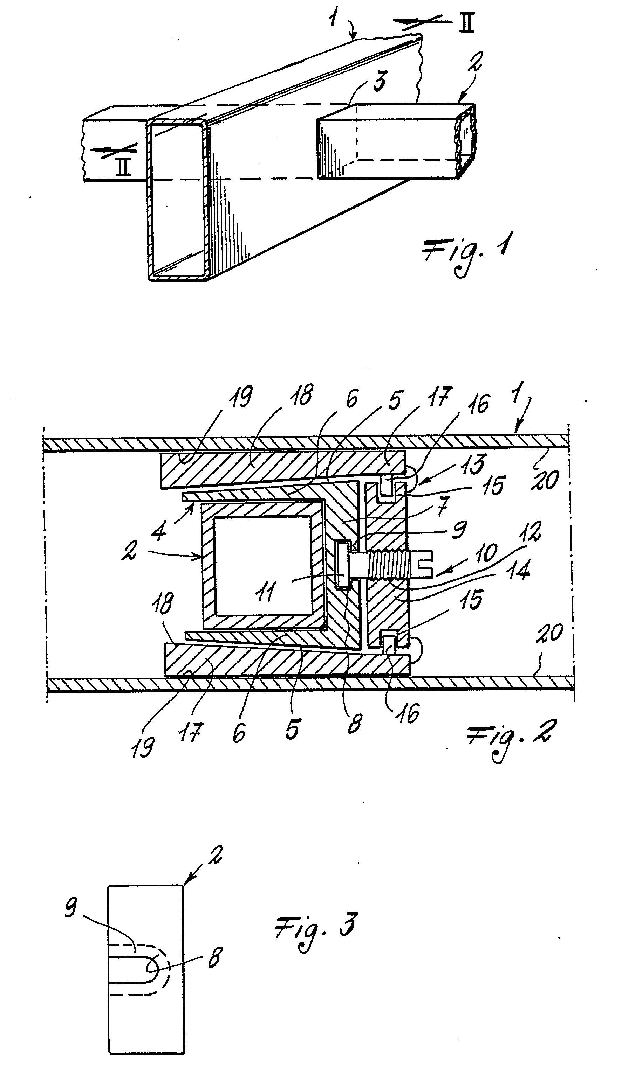

The coupling according to the invention is intended to be inserted into the hollow rod-shaped body as shown in Figure 2, and comprises a first member indicated overall by 4 which in this example is shaped as a fork in such a manner as to embrace the rod-shaped body 2 on three sides. The outer faces 5 of the two arms 6 of the member 4 have inclined-plane surfaces. The base 7 has a seat 8 with undercuts 9 and is open on one side (see Figure 3) to allow insertion of the head 11 of a drive screw 10.

Said screw is screwed into a threaded bore 12 in a second member 13 of the coupling. Said second member embraces the first and comprises three parts in the illustrated embodiment, namely a substantially flat base part 14 which becomes situated parallel to the base 7 of the first member 2 and in which the threaded bore 12 is provided from which there projects the screw 10, which can be provided at its free end with a straight slot or a cross, or with a profiled head, to allow engagment by a tool (screwdriver, socket spanner or the like) with which to tighten the coupling. Furthermore, the base part 14 comprises in two opposing sides two dead bores 15, into which pins 16 provided on the two other identical parts 17 of the second member 13 are inserted. The lateral parts 17 extend at a right angle to the base part 14, and lie over the arms 6 of the first member 4 so that their inclined surfaces 18 face these latter, whereas their opposite surfaces 19 are intended to rest against the minor inner faces 20 of the hollow rod-shaped body 1.

The present invention also covers an embodiment in which the second member 13 is constructed in a single piece, for example of plastics material such as nylon, by conventional methods. The dimensions and choice of materials depend on the application and/or production requirements. The two rod-shaped bodies to be connected together can be of different cross-section from that shown, for example polyhedral or circular, and the two members 4 and 13 will then be shaped in relation thereto. Instead of intersecting at a right angle as shown, the two rod-shaped bodies 1 and 2 can intersect at different angles, and the two members will then be correspondingly shaped. The inner member can be constructed in a number of parts connected together in a suitable manner so as to allow suitable fitting to the traversing body. The operation of the coupling is substantially as follows: the two rod-shaped bodies 1, 2 are inserted one into the other in the position shown in Figure 1. The coupling in its slackened state is inserted into the hollow body 1 until the base 7 of its first member 4 encounters the rod-shaped body 2. At this point the coponents of the coupling assume substantially the position shown in Figure 2. On turning the screw 10 by means of a suitable tool, the members 4 and 13 move relative to each other, and their inclined surfaces 5 and 6 mutually cooperate by virtue of this movement, to elastically force the arm 6 of the first member 4 against the rod-shaped body 2, so locking it. Likewise, the outer faces 19 of the member 13 are forced against the walls 20 of the hollow rod-shaped body 1.

**Claims**

1. A coupling for connecting together intersecting rod-shaped bodies of which at least one is hollow, characterised by comprising, for insertion into the hollow rod-shaped body (1), two members (4, 13), one inside the other, provided with inclined cooperating surfaces (5, 18), the inner (4) of said members being arranged to embrace the other rod-shaped body (2), a screw means (10) joining said members (4, 13) together in such a manner as to produce, when in use, a relative movement between them which, by virtue of the cooperation between said surfaces, results in the connection together of said rod-shaped bodies (1, 2) by means of the coupling.

2. A coupling as claimed in claim 1, characterised in that the inner member (4) comprises at least two arms (6) provided externally with the inclined surface (5).

3. A coupling as claimed in at least one of the preceding claims, characterised in that the outer member (13) comprises at least two arms (17) provided internally with an inclined surface (18).

4. A coupling as claimed in claim 1 and at least one of the subsequent claims, characterised in that the screw means (10) is screw-coupled to the outer member (13) and comprises a head (11) which is axially, but not torsionally, restrained within the inner member (4).

5. A coupling as claimed in at least one of the preceding claims, characterised in that the outer member (13) is in the form of more than one part (14, 17) which are operationally connected together (at 15, 17).

6. A coupling as claimed in at least one of claims 1 to 4, characterised in that the outer member (13) is constructed in a single piece.

7. A coupling as claimed in at least one of claims 1 and 2, characterised in that the inner member (4) is constructed either in one piece, or in more than one piece suitable connected together.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C-1 241 201  (SIHN) <br> * figures * | 1 | F 16 B    7/04 |
| A | FR-A-2 519 716  (CAILLERET) <br> * figures * | 1 | |
| A | FR-A-2 383 347  (PORTENSEIGNE) <br><br> * figures 1, 2 * | | |
| A | DE-A-2 732 048  (INTERNATIONAL COMPUTERS) <br> * figures 1-3 * | 1-4 | |
| A,P | FR-A-2 582 752  (JACCARD) | | |

TECHNICAL FIELDS
SEARCHED (Int. Cl.4)

F 16 B    7/00
F 16 B   17/00
F 16 B   12/00

The present search report has been drawn up for all claims

| Place of search | Date of completion of the search | Examiner |
|---|---|---|
| BERLIN | 11-06-1987 | SCHAEFFLER C.A.A. |